(19) **Europäisches Patentamt**
**European Patent Office**
**Office européen des brevets**

(11) **EP 1 907 910 B1**

(12) **FASCICULE DE BREVET EUROPEEN**

(45) Date de publication et mention
de la délivrance du brevet:
**14.10.2009 Bulletin 2009/42**

(21) Numéro de dépôt: **06778894.3**

(22) Date de dépôt: **20.07.2006**

(51) Int Cl.:
**G05D 1/06** (2006.01)

(86) Numéro de dépôt international:
**PCT/FR2006/001776**

(87) Numéro de publication internationale:
**WO 2007/010141 (25.01.2007 Gazette 2007/04)**

(54) **PROCEDE ET DISPOSITIF DE SECURISATION D'UN VOL AUTOMATIQUE A BASSE ALTITUDE D'UN AERONEF**

VERFAHREN UND EINRICHTUNG ZUM SICHERN EINES AUTOMATISCHEN FLUGES EINES FLUGZEUGS AUF NIEDRIGER HÖHE

METHOD AND DEVICE FOR MAKING SECURE LOW ALTITUDE AUTOMATIC FLIGHT OF AN AIRCRAFT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.07.2005 FR 0507739**

(43) Date de publication de la demande:
**09.04.2008 Bulletin 2008/15**

(73) Titulaire: **Airbus**
**31707 Blagnac (FR)**

(72) Inventeurs:
- **ARTINI, Franck**
  **F-31700 Blagnac (FR)**
- **ISORCE, Eric**
  **F-31000 Toulouse (FR)**

(74) Mandataire: **Hauer, Bernard**
**Bloch & Bonnétat**
**23bis, rue de Turin**
**75008 Paris (FR)**

(56) Documents cités:
**FR-A- 2 325 022**   **FR-A- 2 859 177**
**FR-A- 2 864 269**   **FR-A- 2 864 270**

**Description**

La présente invention concerne un procédé et un dispositif de sécurisation d'un vol automatique à basse altitude d'un aéronef, qui est guidé (automatiquement) le long d'une trajectoire de vol à basse altitude comprenant une trajectoire latérale et une trajectoire verticale.

Bien que non exclusivement, la présente invention s'applique plus particulièrement à un avion de transport militaire qui présente un faible rapport poussée/poids et une forte inertie, et dont les temps de manoeuvre sont en général relativement lents.

Dans le cadre de la présente invention, on entend par vol à basse altitude le vol le long d'une trajectoire de vol (à basse altitude) permettant à un aéronef de suivre au plus près le terrain survolé, notamment pour éviter de se faire repérer. Une telle trajectoire de vol à basse altitude est donc située le plus souvent au plus bas à une hauteur du terrain prédéterminée, par exemple, 500 pieds (environ 150 mètres).

En raison de cette proximité avec le sol, toute déviation verticale vers le bas (au-delà d'une certaine marge de sécurité) de l'aéronef, par rapport à la trajectoire de vol à suivre, lors du guidage de l'aéronef le long de ladite trajectoire de vol, présente un risque important de collision avec le terrain survolé (directement avec le sol ou avec un ouvrage ou un élément situé sur ledit sol). Bien entendu, l'existence d'un tel risque n'est pas acceptable (ou uniquement avec une probabilité d'occurrence par heure de vol, inférieure à un objectif de sécurité prédéterminé).

La présente invention a pour objet de sécuriser un vol à basse altitude d'un aéronef (qui est guidé automatiquement le long d'une trajectoire de vol comprenant une trajectoire latérale et une trajectoire verticale) de manière à rendre hautement improbable toute collision de l'aéronef avec le terrain survolé.

FR 2 859 177 est un exemple de système et procédé de guidage d'un aéronef en vol à basse altitude de l'art antérieur.

La présente invention s'applique plus particulièrement à un vol automatique qui est autonome, c'est-à-dire un vol automatique qui est effectué seulement grâce à des systèmes de navigation, de gestion du vol et de guidage et à une base de données numérique de terrain, qui sont embarqués, sans l'aide d'un quelconque dispositif émissif vers l'avant, tel qu'un radar par exemple. On sait qu'un tel vol automatique autonome peut être soumis à un ensemble d'erreurs concernant notamment :

- la navigation : la position donnée par le système de navigation embarqué n'est pas exactement la position réelle de l'aéronef ;
- le guidage : un pilote automatique asservit la position donnée par le système de navigation sur une trajectoire calculée par un système de gestion du vol. Cet asservissement présente une performance intrinsèque qui traduit l'aptitude du pilote automatique à guider l'aéronef sur la trajectoire demandée. Une erreur de-guidage peut également exister lors d'un vol à l'aide d'un directeur de vol que le pilote doit suivre manuellement ;
- la trajectoire de vol : la précision de cette trajectoire dépend de la précision de l'algorithme et du processeur du calculateur utilisé, et également surtout d'éventuelles erreurs de modélisation numérique du terrain survolé (c'est-à-dire d'erreurs concernant la base de données numérique de terrain utilisée).

On notera que la surveillance de l'écart entre la position estimée de l'aéronef et la trajectoire de vol basse altitude calculée que l'aéronef doit suivre, pour éventuellement détecter une déviation verticale excessive, ne permet pas de tenir compte notamment de l'influence des erreurs de navigation et des erreurs relatives à la base de données numérique de terrain utilisée.

La présente invention a pour objet de remédier à ces inconvénients. Elle concerne un procédé particulièrement efficace de sécurisation d'un vol automatique et autonome à basse altitude d'un aéronef, qui est donc guidé (automatiquement et de façon autonome) le long d'une trajectoire de vol à basse altitude.

A cet effet, selon l'invention, ledit procédé est remarquable en ce que :

A/ lors dudit vol à basse altitude, on réalise, de façon automatique et répétitive, la suite d'opérations successives suivante :

a) on détermine une valeur de seuil courante dépendant au moins de l'altitude courante de ladite trajectoire de vol à basse altitude, qui est suivie par l'aéronef, ainsi que d'erreurs de navigation de l'aéronef, d'erreurs de guidage de l'aéronef et d'erreurs de calcul de ladite trajectoire de vol ;
b) on mesure une hauteur réelle courante de l'aéronef au-dessus du terrain survolé ; et
c) on compare cette hauteur réelle courante mesurée à ladite valeur de seuil courante ; et

B/ si ladite hauteur réelle courante devient inférieure ou égale à ladite valeur de seuil courante, on émet un signal d'alerte (sonore et/ou visuel).

Ainsi, grâce à l'invention, on est en mesure de détecter toute déviation verticale excessive vers le bas, en surveillant la hauteur réelle courante de l'aéronef (c'est-à-dire en la mesurant de façon répétitive et en la comparant à ladite valeur de seuil prédéterminée). Une telle vérification est particulièrement efficace, puisqu'elle tient compte, non pas d'une hauteur estimée, mais de la hauteur réelle courante de l'aéronef, c'est-à-dire de la hauteur effective par rapport au terrain réel.

De plus, comme précisé ci-dessous, ladite valeur de seuil est déterminée de manière à prendre en compte les différentes erreurs susceptibles d'apparaître lors d'un tel vol automatique et autonome à basse altitude.

Dans un mode de réalisation préféré, à l'étape A/a), on calcule ladite valeur de seuil H0, à l'aide de l'expression (1) suivante :

$$H0 = Z1 - Zmoy - \left( \sum_i Li \right)$$

dans laquelle :

- Z1 représente l'altitude courante de ladite trajectoire de vol (calculée), qui correspond à la position latérale courante de l'aéronef, c'est-à-dire l'altitude qui correspond à la projection orthogonale de la position latérale courante de l'aéronef sur la trajectoire de vol calculée ;
- Zmoy représente une altitude moyenne du terrain numérique sous l'aéronef, qui est issu d'une base de données numérique de terrain ; et
- les valeurs Li représentent les limites au moins des erreurs de navigation et de guidage et d'erreurs concernant ladite base de données numérique de terrain, qui est utilisée pour calculer ladite trajectoire de vol à basse altitude. Chaque limite exprime le fait que l'erreur correspondante n'est pas supérieure à cette limite avec une probabilité plus grande qu'une probabilité d'objectif. Dans ce cas, la probabilité d'objectif est celle pour laquelle le signal d'alerte ne doit pas être émis durant le vol à basse altitude.

En outre, lorsque le terrain survolé par l'aéronef est sensiblement plat :

- Z1 représente une hauteur de garde HG prédéterminée, par exemple 500 pieds (environ 1 50 mètres) ; et
- Zmoy est considérée comme nulle,

de manière à obtenir une expression simplifiée pour le calcul de la valeur de seuil HO, à savoir

$$H0 \simeq HG - \left( \sum_i Li \right).$$

En outre, avantageusement, à l'étape A/b), on mesure ladite hauteur réelle à l'aide d'un radioaltimètre.

Par ailleurs, à l'étape B/, si ladite hauteur réelle courante devient inférieure ou égale à ladite valeur de seuil courante, en plus d'émettre un signal d'alerte, on interrompt le vol à basse altitude et on commande l'aéronef (automatiquement et manuellement) de manière à augmenter son altitude pour l'amener à une altitude de sécurité (avant de revenir éventuellement à un vol à basse altitude si cela s'avère possible).

La présente invention concerne également un dispositif de sécurisation d'un vol à basse altitude d'un aéronef qui est guidé automatiquement (et de façon autonome) le long d'une trajectoire de vol (à basse altitude).

Selon l'invention, ce dispositif est remarquable en ce qu'il comporte :

- des premiers moyens pour déterminer une valeur de seuil courante dépendant au moins de l'altitude courante de ladite trajectoire de vol à basse altitude (précalculée), qui est suivie par l'aéronef, ainsi que d'erreurs de navigation, d'erreurs de guidage et d'erreurs de calcul de la trajectoire de vol. Ces dernières dépendent principalement d'une erreur relative à la base de données numérique de terrain utilisée, qu'elle soit issue d'un fichier chargé à partir du sol ou élaborée à bord de l'aéronef par exemple à l'aide d'un radar en mode cartographie du sol ;
- des deuxièmes moyens, en particulier au moins un radioaltimètre, pour mesurer une hauteur réelle courante de l'aéronef au-dessus du terrain survolé, lors d'un vol à basse altitude le long de ladite trajectoire de vol ;
- des troisièmes moyens qui sont reliés auxdits premiers et deuxièmes moyens, pour comparer ladite hauteur réelle courante à ladite valeur de seuil courante ; et
- des quatrièmes moyens qui sont reliés auxdits troisièmes moyens, pour émettre un signal d'alerte si ladite hauteur réelle courante devient inférieure ou égale à ladite valeur de seuil courante.

En outre, dans un mode de réalisation particulier, le dispositif conforme à l'invention comporte, de plus, des cinquièmes moyens pour commander l'aéronef de manière à augmenter son altitude et l'amener à une altitude de sécurité, lorsque ladite hauteur réelle courante devient inférieure ou égale à ladite valeur de seuil courante.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre schématiquement dans un plan vertical les caractéristiques principales prises en compte pour la mise en oeuvre de la présente invention.

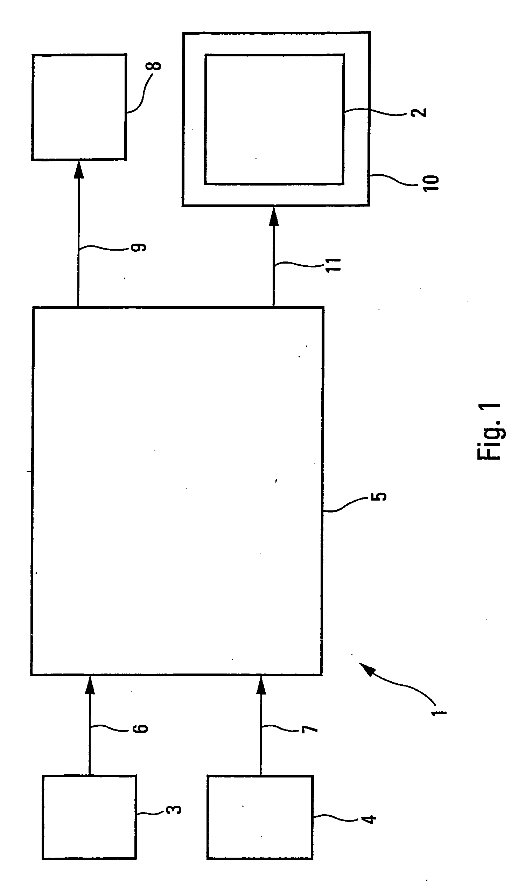

Le dispositif 1 conforme à l'invention et représenté schématiquement sur la figure 1, est destiné à sécuriser un vol à basse altitude d'un aéronef A, par exemple d'un avion de transport, d'un avion de chasse ou d'un hélicoptère.

Ledit dispositif 1 est associé à un système de pilotage usuel 2, qui est embarqué sur l'aéronef A et qui comporte :

- des moyens, par exemple un système de gestion de vol, pour déterminer une trajectoire de vol T0 comprenant une trajectoire TL définie dans un plan horizontal et une trajectoire verticale TV (ou profil de vol) définie dans un plan vertical. Pour pouvoir réaliser un vol à basse altitude, la trajectoire de vol T0 (à basse altitude) doit permettre à l'aéronef A de suivre au plus près le terrain TA survolé (à une hauteur minimale du sol correspondant à une hauteur de garde sélectionnée par le pilote) ; et
- un moyen de guidage, par exemple un pilote automatique, pour guider l'aéronef A le long de ladite trajectoire de vol T0. Ce moyen de guidage détermine des ordres de pilotage de l'aéronef A qui sont tels que ce dernier suit ladite trajectoire de vol T0. Ces ordres de pilotage sont transmis à des moyens d'actionnement d'organes commandés, tels que par exemple des gouvernes (de direction, de profondeur, ...) de l'aéronef A.

Selon l'invention, ledit dispositif 1, qui est donc destiné à sécuriser le vol à basse altitude de l'aéronef A qui est guidé automatiquement le long d'une trajectoire de vol T0 à basse altitude, comporte :

- des moyens 3 pour déterminer une valeur de seuil H0 courante, dépendant au moins de l'altitude Z1 courante (c'est-à-dire de l'altitude à une position courante P2 estimée de l'aéronef A et précisée ci-dessous) de ladite trajectoire de vol T0 à basse altitude, qui est suivie par l'aéronef A, ainsi que d'erreurs de navigation de l'aéronef A, d'erreurs de guidage de l'aéronef A et d'erreurs de calcul de ladite trajectoire de vol T0 ;
- des moyens 4 pour mesurer (de façon répétitive) la hauteur réelle RA courante de l'aéronef A au-dessus du terrain réel TA survolé ;
- des moyens 5 qui sont reliés par l'intermédiaire de liaisons 6 et 7 respectivement auxdits moyens 3 et 4 et qui sont destinés à comparer (de façon répétitive) ladite hauteur réelle RA courante à ladite valeur de seuil H0 courante ; et
- des moyens 8 qui sont reliés par l'intermédiaire d'une liaison 9 auxdits moyens 5 et qui sont destinés à émettre un signal d'alerte, dès que ladite hauteur réelle RA courante mesurée de l'aéronef A devient inférieure ou égale à ladite valeur de seuil HO courante calculée.

Dans un mode de réalisation particulier :

- lesdits moyens 4 comportent au moins un radioaltimètre, c'est-à-dire un appareil de radionavigation qui est installé à bord de l'aéronef A et qui utilise la réflexion d'ondes radioélectriques sur le sol (terrain réel TA) en vue de déterminer la hauteur réelle RA de l'aéronef A au-dessus dudit sol (terrain réel TA) ; et
- lesdits moyens 8 sont formés de manière à pouvoir émettre un signal d'alerte de type visuel et/ou de type sonore.

Le dispositif 1 conforme à l'invention comporte également des moyens 10 qui sont reliés par l'intermédiaire d'une liaison 11 auxdits moyens 5 et qui sont formés pour commander l'aéronef A de manière à augmenter son altitude et à l'amener à une altitude de sécurité prédéterminée, lorsque la hauteur réelle RA courante de l'aéronef A devient inférieure ou égale à ladite valeur de seuil H0 courante.

Dans un mode de réalisation préféré, lesdits moyens 10 sont des moyens de pilotage automatique et comportent par exemple le système de pilotage automatique 2 précité. Toutefois, ces moyens 10 peuvent également comprendre des moyens de-pilotage manuel usuels.

La présente invention s'applique plus particulièrement à un vol automatique qui est autonome, c'est-à-dire un vol automatique qui est effectué seulement grâce à des systèmes de navigation, de gestion du vol et de guidage et à une base de données numérique de terrain, qui sont embarqués, sans l'aide d'un quelconque dispositif émissif vers l'avant, tel qu'un radar par exemple.

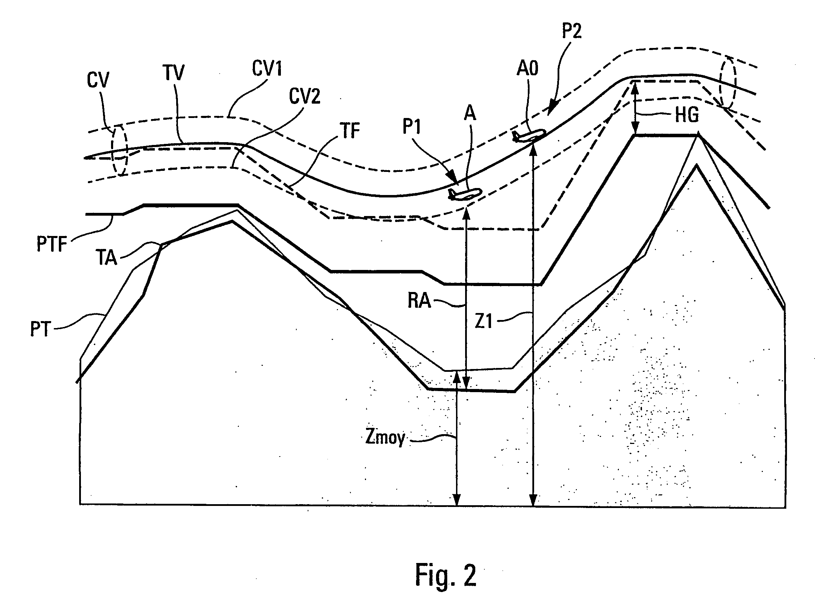

Le dispositif 1 conforme à l'invention est en mesure de détecter toute déviation verticale excessive vers le bas, en surveillant la hauteur courante RA de l'aéronef A (c'est-à-dire en la mesurant de façon répétitive et en la comparant à ladite valeur de seuil H0 calculée de façon répétitive). Une telle vérification est particulièrement efficace, puisqu'elle tient compte de la hauteur courante RA réelle de l'aéronef A et non pas d'une hauteur estimée. Cette hauteur RA est réelle, car elle est mesurée par rapport au terrain réel TA et non pas calculée par rapport à un terrain estimé, comme précisé ci-dessous en référence à la figure 2.

De plus, comme également précisé ci-après, ladite valeur de seuil H0 est déterminée de manière à prendre en compte les différentes erreurs susceptibles d'apparaître lors d'un vol automatique et autonome à basse altitude. De plus, elle est calculée par rapport à une référence précalculée de sorte que le procédé conforme à l'invention est appelé procédé "par corrélation de la hauteur radioaltimètre" (à savoir corrélation entre la hauteur RA et la consigne de vol représentée par la trajectoire de vol T0 précalculée).

On sait qu'un tel vol automatique et autonome peut être soumis à un ensemble d'erreurs instantanées, aussi bien dans le plan vertical que dans le plan latéral, et notamment à :

- une erreur de navigation PEE : la position donnée par un système de navigation embarqué n'est pas exactement la position réelle de l'aéronef A ;
- une erreur de guidage FTE : le moyen de guidage du système de pilotage automatique 2 asservit la position donnée par le système de navigation sur la trajectoire de vol T0 calculée par le système de gestion de vol. Cet asservissement présente une performance intrinsèque qui traduit l'aptitude du moyen de guidage (pilote automatique par exemple) à guider l'aéronef sur la trajectoire de vol T0 demandée. Une erreur de guidage peut également exister lors d'un vol à l'aide d'un directeur de vol que le pilote doit suivre manuellement ; et
- une erreur de trajectoire de vol PDE : la précision de la trajectoire de vol dépend de la précision de l'algorithme et du processeur du calculateur utilisé, et également et surtout d'une éventuelle erreur de modélisation numérique du terrain survolé (c'est-à-dire d'une erreur DTDBE concernant la base de données numérique de terrain, utilisée pour calculer la trajectoire de vol TO).

On notera que la somme des différentes erreurs définit une erreur système totale TSE ("Total System Error" en anglais).

Dans un mode de réalisation préféré, lesdits moyens 3 calculent ladite valeur de seuil H0 courante, à l'aide de l'expression (1) suivante :

$$H0 = Z1 - Zmoy - \left( \sum_i Li \right)$$

dans laquelle :

- Z1 représente l'altitude courante le long de ladite trajectoire de vol T0 qui est suivie par ledit aéronef A, c'est-à-dire l'altitude à la position P2 précisée ci-dessous, à savoir l'altitude de la trajectoire de vol T0 correspondant à la position latérale courante estimée de l'aéronef A ;
- Zmoy représente une altitude moyenne du terrain numérique sous l'aéronef A à la position réelle P1 précisée ci-dessous. Ce terrain numérique PT est issu d'une base de données numérique de terrain, comme précisé ci-dessous ; et
- les valeurs Li représentent les limites au moins :

    ■ d'erreurs verticales de navigation PEEz ;
    ■ d'erreurs verticales de guidage FTEz ; et
    ■ d'erreurs verticales DTDBEz concernant la base de données numérique de terrain, qui est utilisée pour calculer ladite trajectoire de vol T0 à basse altitude.

Pour permettre de bien comprendre les caractéristiques de la présente invention, on renvoie à la figure 2, sur laquelle sont montrés, dans un plan vertical :

- l'aéronef A dit réel, c'est-à-dire qui est montré à la position réelle P1 de ce dernier ;
- la trajectoire verticale TV de la trajectoire de vol T0 telle que calculée ;
- l'aéronef AO dit estimé, c'est-à-dire qui est montré à la position estimée P2 de ce dernier sur ladite trajectoire de vol T0 telle que calculée. Les positions P1 et P2 correspondent à un même instant ;
- un tunnel de vol CV défini autour de la trajectoire de vol T0 (en l'occurrence la trajectoire verticale TV) et présentant une limite supérieure CV1 et une limite inférieure CV2 ;
- le profil du terrain PT tel qu'issu de la base de données numérique de terrain utilisée ;
- un profil de terrain filtré PTF calculé à partir dudit profil de terrain PT, comme précisé ci-dessous ;
- un terrain filtré TF qui est obtenu à l'aide d'une translation vers le haut d'une hauteur de garde HG, par exemple 500 pieds (environ 150 mètres), à partir dudit profil de terrain filtre PTF ; et
- le terrain réel TA, c'est-à-dire le terrain physique.

Opérationnellement, une trajectoire latérale TL est d'abord définie par l'opérateur (directement ou via un système auto-routeur). Le long de cette trajectoire latérale TL, la trajectoire verticale TV de vol à basse altitude est calculée au-dessus du terrain filtré TF qui est obtenu à partir du profil de terrain filtré PTF. Ce dernier est déterminé à partir du profil de terrain PT issu de la base de données numériques de terrain de la manière suivante : pour chaque abscisse le long de la trajectoire latérale TL, l'élévation de terrain correspondante est l'élévation la plus haute de PT (c'est-à-dire extraite de la base de données numériques de terrain) sous une surface d'extraction qui correspond globalement latéralement à la largeur d'un corridor de vol plus, de chaque côté de la trajectoire, la limite de l'erreur PDE correspondant à un objectif de probabilité. Longitudinalement, la surface d'extraction prend ainsi en compte les erreurs longitudinales.

Par conséquent, dans le cadre de la présente invention, un signal d'alerte est émis quand la déviation verticale entre, d'une part, la position réelle courante P1 (de l'aéronef réel A) et, d'autre part, la position P2 correspondante de la trajectoire calculée TV, est plus grande qu'un seuil d'alarme, c'est-à-dire quand :

hauteur RA $\leq$ altitude définie - altitude moyenne du terrain numérique sous l'aéronef réel A - (somme des limites des erreurs FTEz, PEEz, DTDBEz)
où :

- l'altitude définie est l'altitude Z1 de la position P2 ;
- les erreurs FTEz, PEEz et DTDBEz sont les composantes verticales desdites erreurs FTE, PEE et DTDBE précitées ;
- les limites des erreurs FTEz, PEEz et DTDBEz sont les limites de ces erreurs, données pour une probabilité qui correspond à une probabilité maximale admissible opérationnellement d'excursion du tunnel CV ($10^{-3}$, $10^{-4}$/hdv ...), hdv signifiant heure de vol ;
- l'altitude moyenne du terrain numérique sous l'aéronef A est l'altitude moyenne dans le cercle de la limite de l'erreur PEE choisie (correspondant à la probabilité maximale choisie), qui est centré sur la position latérale estimée de l'aéronef A, et donnée pour la même probabilité d'excursion que les erreurs verticales ci-dessus.

Au-dessus d'un terrain plat, le signal d'alerte est émis quand : hauteur RA$\leq$ hauteur de garde HG-(somme des limites des erreurs FTEz, PEEz, DTDBEz).

En effet, lorsque le terrain TA survolé par l'aéronef A est sensiblement plat, on prévoit selon l'invention que :

- Z1 représente la hauteur de garde HG dans ladite expression (1) ; et
- Zmoy est considérée comme nulle,

de manière à obtenir une expression simplifiée pour le calcul de la valeur de seuil H0, à savoir

$$HO = HG - \left(\sum_i Li\right).$$

Ci-après, on considère une panne système qui arrive avec un probabilité Pj et qui induit une déviation dj vers le haut ou vers le bas avec la même probabilité.

L'aéronef A percute le sol (terrain réel TA) si la déviation vers le bas avec ou sans panne système est plus grande que la hauteur de garde HG, en général 500 pieds (150 mètres environ), et aucun signal d'alerte n'est émis par les moyens 8.

De plus, ceci suppose que l'équipage de l'aéronef A soit capable de contrer la déviation due à cette panne, dès le moment où un signal d'alerte est émis et donc que la perte de hauteur pendant cette manoeuvre soit inférieure à 500 pieds moins le seuil d'alarme :

$$P = \frac{1}{2} P(|TSEz \pm dj| > d).P \text{ (signal d'alerte non émis)}$$

avec :

$$P(\,|\,TSEz \pm dj\,| > d) = Pj\,[1 - P(O \le TSEz \le d - dj) - P(O \le TSEz \le d + dj)] + (1 - Pj)\,[1 - 2.P(O \le TSEz \le d)]$$

On notera que $\underline{d}$ représente la valeur de la hauteur de garde HG, choisie en général par le pilote de l'aéronef A.

La probabilité précédente doit être inférieure à l'objectif de sécurité choisi, par exemple $10^{-9}$/hdv. On peut voir qu'avec P(signal d'alerte non émis) < 1, la probabilité que $TSEz \ge 500$ pieds (ou que $TSEz \ge (500-dj)$) peut être plus grande que $10^{-9}$/hdv, puisqu'il faut la combiner avec la probabilité de non-détection d'une sortie du tunnel CV.

Le seuil de l'alarme (valeur de seuil HO) dépend donc également de la capacité de récupération de l'aéronef A en présence d'une panne système.

A titre d'exemple, si :

- PDEz $\approx$ 30 mètres à 90% ;
- PEEz $\approx$ 70 mètres à 99.99999% ;
- PSEz $\approx$ 60 pieds à 95%,

alors, en supposant que ces erreurs sont gaussiennes :

- l'écart-type total $\sigma$ de TSEz = 80 pieds (environ 24 mètres), donc TSEz = 1.960x80 $\approx$ 150 pieds (environ 45 mètres) à 95% ;
- P(signal d'alerte non émis) : doit être cohérente avec l'objectif de disponibilité opérationnelle au niveau de l'aéronef A.

Si l'on considère une panne système arrivant avec une probabilité (par exemple) Pj = $10^{-5}$/hdv et dj = 300 pieds (environ 90 mètres), alors la probabilité que l'aéronef A percute le sol TA est d'environ $6.2.10^{-8}$/hdv sans signal d'alerte.

Mais si le signal d'alerte est prévu, la probabilité que ce signal d'alerte n'est pas émis doit être $\le 1.6.10^{-2}$/hdv seulement, afin que la probabilité de percuter le sol soit $\le 10^{-9}$/hdv [pourvu que la perte de hauteur pendant la manoeuvre de recouvrement déclenchée dès que le signal d'alerte est émis est inférieure à 200 pieds (environ 60 mètres) (200=500-300)].

Cet objectif de $1.6.10^{-2}$/hdv est largement à la portée des systèmes actuels.

Par conséquent, pour la mise en oeuvre de la présente invention, il suffit donc, après avoir au sol :

- estimé les erreurs élémentaires (navigation, guidage, base de données numériques de terrain, ...), ce qui permet dans le cas d'erreurs gaussiennes de déterminer l'écart-type de chaque erreur, et ensuite celui de l'erreur totale (hors panne système) ;
- défini au moins une panne système à prendre en compte dans l'étude de sécurité, ainsi que sa probabilité d'occurrence et la déviation verticale qu'elle induit ;
- évalué la perte de hauteur, lors de la manoeuvre de recouvrement en présence de cette panne système ; et
- spécifié le niveau de sécurité requis sous la forme d'une probabilité de collision avec le sol à ne pas dépasser, c'est-à-dire d'une probabilité que la déviation totale soit supérieure ou égale à la hauteur de garde minimale sélectionnable (500 pieds typiquement),

de :

- définir la valeur de seuil H0 suivant des objectifs opérationnels (probabilité maximale d'interrompre la mission à cause du signal d'alerte et performances de suivi de trajectoire) ainsi qu'en termes de sécurité (probabilité de percuter le sol) ; et
- de faire en sorte de respecter l'objectif de probabilité de non-détection d'un dépassement de cette valeur de seuil, afin de respecter l'objectif global de sécurité.

On notera que l'équipage de l'aéronef A doit être conscient que le dispositif 1 conforme à l'invention peut émettre un signal d'alerte, alors que la hauteur réelle RA de l'aéronef A est très supérieure à la hauteur de garde HG. Ce cas peut apparaître typiquement, lorsque la trajectoire de vol T0 s'enfonce dans le creux d'une vallée, mais que l'aéronef A s'en écarte suffisamment, pour que le signal d'alerte soit émis.

En général, on vérifiera que cette trajectoire de vol T0 est :

- volable relativement aux performances de montée de l'aéronef A ;
- manoeuvrable relativement aux facteurs de charge maximaux admissibles ; et
- toujours située à une hauteur de garde au-dessus du terrain filtré PTF.

**Revendications**

1. Procédé de sécurisation d'un vol à basse altitude d'un aéronef (A) qui est guidé automatiquement le long d'une trajectoire de vol à basse altitude,
   **caractérisé en ce que** :

   A/ lors dudit vol à basse altitude, on réalise, de façon automatique et répétitive la suite d'opérations successives suivante :

   a) on détermine une valeur de seuil courante dépendant au moins de l'altitude courante (Z1) de ladite trajectoire de vol à basse altitude, qui est suivie par l'aéronef (A), ainsi que d'erreurs de navigation de l'aéronef (A), d'erreurs de guidage de l'aéronef (A) et d'erreurs de calcul de ladite trajectoire de vol;
   b) on mesure une hauteur réelle courante (RA) de l'aéronef (A) au-dessus du terrain (TA) survolé ; et
   c) on compare cette hauteur réelle courante (RA) mesurée à ladite valeur de seuil courante ; et

   B/ si ladite hauteur réelle courante (RA) devient inférieure ou égale à ladite valeur de seuil courante, on émet un signal d'alerte.

2. Procédé selon la revendication 1,
   **caractérisé en ce qu'**à l'étape A/a), on calcule ladite valeur de seuil H0, à l'aide de l'expression suivante :

$$HO = Z1 - Zmoy - \left( \sum_i Li \right)$$

   dans laquelle :

   - Z1 représente l'altitude courante de ladite trajectoire de vol, qui est suivie par l'aéronef (A) ;
   - Zmoy représente une altitude moyenne du terrain sous l'aéronef (A), qui est issu d'une base de données numérique de terrain ; et
   - les valeurs Li représentent les limites au moins desdites erreurs de navigation et de guidage et d'erreurs concernant ladite base de données numérique de terrain, qui est utilisée pour calculer ladite trajectoire de vol à basse altitude.

3. Procédé selon la revendication 2,
   **caractérisé en ce que**, lorsque le terrain survolé (TA) par l'aéronef (A) est sensiblement plat :

   - Z1 représente une hauteur de garde prédéterminée ; et
   - Zmoy est considérée comme nulle.

4. Procédé selon l'une quelconque des revendications précédentes, **caractérisé en ce qu'**à l'étape A/b), on mesure ladite hauteur réelle (RA) à l'aide d'un radioaltimètre.

5. Procédé selon l'une quelconque des revendications précédentes, **caractérisé en ce qu'**à l'étape B/, si ladite hauteur réelle courante (RA) devient inférieure ou égale à ladite valeur de seuil courante, on interrompt le vol à basse altitude et on commande l'aéronef (A) de manière à augmenter son altitude pour l'amener à une altitude de sécurité.

6. Dispositif de sécurisation d'un vol à basse altitude d'un aéronef (A) qui est guidé automatiquement le long d'une trajectoire de vol à basse altitude,
   **caractérisé en ce qu'**il comporte :

   - des premiers moyens (3) pour déterminer une valeur de seuil courante dépendant au moins de l'altitude courante (Z1) de ladite trajectoire de vol à basse altitude, qui est suivie par l'aéronef (A), ainsi que d'erreurs de navigation, d'erreurs de guidage et d'erreurs de calcul de ladite trajectoire de vol ;
- des deuxièmes moyens (4) pour mesurer une hauteur réelle courante (RA) de l'aéronef (A) au-dessus du terrain (TA) survolé lors d'un vol à basse altitude le long de ladite trajectoire de vol ;
- des troisièmes moyens (5) qui sont reliés auxdits premiers et deuxièmes moyens (3, 4), pour comparer ladite hauteur réelle courante (RA) à ladite valeur de seuil courante ; et
- des quatrièmes moyens (8) qui sont reliés auxdits troisièmes moyens (5), pour émettre un signal d'alerte, si ladite hauteur réelle courante (RA) devient inférieure ou égale à ladite valeur de seuil courante.

**7.** Dispositif selon la revendication 6,
**caractérisé en ce que** lesdits deuxièmes moyens (4) comportent au moins un radioaltimètre.

**8.** Dispositif selon l'une des revendications 6 et 7,
**caractérisé en ce qu'**il comporte, de plus, des cinquièmes moyens (10) pour commander l'aéronef (A) de manière à augmenter son altitude et à l'amener à une altitude de sécurité, lorsque ladite hauteur réelle courante (RA) devient inférieure ou égale à ladite valeur de seuil courante.

**9.** Aéronef,
**caractérisé en ce qu'**il comporte un dispositif (1) tel que celui spécifié sous l'une quelconque des revendications 6 à 8.


**Claims**

**1.** A method for making secure a low-altitude flight of an aircraft (A) which is automatically guided along a low-altitude flight trajectory,
**characterized in that:**

A/ during said low-altitude flight, the following string of successive operations is carried out in an automatic and repetitive manner:

a) a current threshold value is determined, depending at least on the current altitude (Z1) of said low-altitude flight trajectory, which is followed by the aircraft (A), as well as on navigation errors of the aircraft (A), guidance errors of the aircraft (A) and errors in calculating said flight trajectory;
b) a current real height (RA) of the aircraft (A) above the terrain (TA) overflown is measured; and
c) this measured current real height (RA) is compared with said current threshold value; and

B/ if said current real height (RA) becomes less than or equal to said current threshold value, an alert signal is emitted.

**2.** The method as claimed in claim 1,
**characterized in that** in step A/a), said threshold value H0 is calculated with the aid of the following expression:

$$H0 = Z1 - Zmoy - \left(\sum_i Li\right)$$

in which:

- Z1 represents the current altitude of said flight trajectory, which is followed by the aircraft (A);
- Zmoy represents an average altitude of the terrain under the aircraft (A), which arises from a digital terrain database; and
- the values Li represent the limits at least of said navigation and guidance errors and of errors

relating to said digital terrain database, which is used to calculate said low-altitude flight trajectory.

**3.** The method as claimed in claim 2,

**characterized in that**, when the terrain overflown (TA) by the aircraft (A) is substantially flat:

- Z1 represents a predetermined guard height; and
- Zmoy is considered to be zero.

4. The method as claimed in any one of the preceding claims,
**characterized in that** in step A/b), said real height (RA) is measured with the aid of a radioaltimeter.

5. The method as claimed in any one of the preceding claims,
**characterized in that** in step B/, if said current real height (RA) becomes less than or equal to said current threshold value, the low-altitude flight is interrupted and the aircraft (A) is controlled so as to increase its altitude such as to bring it to a security altitude.

6. A device for making secure a low-altitude flight of an aircraft (A) which is automatically guided along a low-altitude flight trajectory,
**characterized in that** it comprises:

- first means (3) for determining a current threshold value depending at least on the current altitude (Z1) of said low-altitude flight trajectory, which is followed by the aircraft (A), as well as navigation errors, guidance errors and errors in calculating said flight trajectory;
- second means (4) for measuring a current real height (RA) of the aircraft (A) above the terrain (TA) overflown during a low-altitude flight along said flight trajectory;
- third means (5) which are linked to said first and second means (3, 4), for comparing said current real height (RA) with said current threshold value; and
- fourth means (8) which are linked to said third means (5), for emitting an alert signal, if said current real height (RA) becomes less than or equal to said current threshold value.

7. The device as claimed in claim 6,
**characterized in that** said second means (4) comprise at least one radioaltimeter.

8. The device as claimed in one of claims 6 and 7,
**characterized in that** it comprises, moreover, fifth means (10) for controlling the aircraft (A) so as to increase its altitude and bring it to a security altitude, when said current real height (RA) becomes less than or equal to said current threshold value.

9. An aircraft,
**characterized in that** it comprises a device (1) such as that specified under any one of claims 6 to 8.

**Patentansprüche**

1. Verfahren zum Sichern eines Fluges eines Luftfahrzeugs (A) auf niedriger Höhe, das automatisch entlang einer Flugbahn auf niedriger Höhe geführt wird,
**dadurch gekennzeichnet, dass:**

A/ bei dem Flug auf niedriger Höhe auf automatische und wiederholte Weise die folgende Reihe aufeinanderfolgender Vorgänge durchgeführt wird:

a) Bestimmung eines laufenden Schwellenwerts, der mindestens von Folgendem abhängt: von der laufenden Höhe (Z1) der Flugbahn auf niedriger Höhe, die von dem Luftfahrzeug (A) verfolgt wird, sowie von Fehlern bei der Navigation des Luftfahrzeugs (A), Fehlern bei der Lenkung des Luftfahrzeugs (A) und Fehlern bei der Berechnung der Flugbahn;
b) Messung einer tatsächlichen laufenden Höhe (RA) des Luftfahrzeugs (A) über dem überflogenen Boden (TA); und
c) Vergleichen dieser gemessenen tatsächlichen laufenden Höhe (RA) mit dem laufenden Schwellenwert; und

B/ ein Alarmsignal ausgegeben wird, wenn die tatsächliche laufende Höhe (RA) niedriger als oder gleich dem laufenden Schwellenwert wird.

**2.** Verfahren nach Anspruch 1,
**dadurch gekennzeichnet, dass** im Schritt A/a) der Schwellenwert H0 mit Hilfe des folgenden Ausdrucks berechnet wird:

$$H0 = Z1 - Zmoy - \left( \sum_i Li \right)$$

wobei:

- Z1 die laufende Höhe der Flugbahn darstellt, die von dem Luftfahrzeug (A) verfolgt wird;
- Zmoy eine mittlere Höhe des Bodens unter dem Luftfahrzeug (A) darstellt, die aus einer numerischen Bodendatenbank entnommen wurde; und
- die Werte Li, die Grenzwerte mindestens von den Navigations- und Lenkungsfehlern und von Fehlern darstellen, die die numerische Bodendatenbank betreffen, die verwendet wird, um die Flugbahn auf niedriger Höhe zu berechnen.

**3.** Verfahren nach Anspruch 2, **dadurch gekennzeichnet, dass,** wenn der von dem Luftfahrzeug (A) überflogene Boden (TA) im Wesentlichen eben ist,

- Z1 eine vorbestimmte Diensthöhe darstellt; und
- Zmoy als null angenommen wird.

**4.** Verfahren nach einem der vorhergehenden Ansprüche, **dadurch gekennzeichnet, dass** im Schritt A/b) die tatsächliche Höhe (RA) mit Hilfe eines Funkhöhenmessers gemessen wird.

**5.** Verfahren nach einem der vorhergehenden Ansprüche, **dadurch gekennzeichnet, dass** im Schritt B/, wenn die tatsächliche laufende Höhe (RA) kleiner als der oder gleich dem laufenden Schwellenwert wird, der Flug auf niedriger Höhe unterbrochen wird und das Luftfahrzeug (A) derart gesteuert wird, dass seine Höhe erhöht wird, um es in eine Sicherheitshöhe zu bringen.

**6.** Vorrichtung zum Sichern eines Fluges eines Luftfahrzeugs (A) auf niedriger Höhe, das automatisch entlang einer Flugbahn auf niedriger Höhe geführt wird, **dadurch gekennzeichnet, dass** sie umfasst:

- erste Mittel (3) zur Bestimmung eines laufenden Schwellenwerts, der mindestens von Folgendem abhängt: von der laufenden Höhe (Z1) der Flugbahn auf niedriger Höhe, die von dem Luftfahrzeug (A) verfolgt wird, sowie von Navigationsfehlern, Lenkungsfehlern und Fehlern bei der Berechnung der Flugbahn;
- zweite Mittel (4) zur Messung einer tatsächlichen laufenden Höhe (RA) des Luftfahrzeugs (A) über dem Boden (TA), der bei einem Flug auf niedriger Höhe entlang der Flugbahn überflogen wird;
- dritte Mittel (5), die mit den ersten und zweiten Mitteln (3, 4) verbunden sind, um die tatsächliche laufende Höhe (RA) mit dem laufenden Schwellenwert zu vergleichen; und
- vierte Mittel (8), die mit den dritten Mitteln (5) verbunden sind, um ein Alarmsignal auszugeben, wenn die tatsächliche laufende Höhe (RA) niedriger als oder gleich dem laufenden Schwellenwert wird.

**7.** Vorrichtung nach Anspruch 6, **dadurch gekennzeichnet, dass** die zweiten Mittel (4) mindestens einen Funkhöhenmesser umfassen.

**8.** Vorrichtung nach einem der Ansprüche 6 und 7, **dadurch gekennzeichnet, dass** sie darüber hinaus fünfte Mittel (10) umfasst, um das Luftfahrzeug (A) derart zu steuern, dass seine Höhe erhöht wird und es in eine Sicherheitshöhe gebracht wird, wenn die tatsächliche laufende Höhe (RA) kleiner als der oder gleich dem laufenden Schwellenwert wird.

**9.** Luftfahrzeug,
**dadurch gekennzeichnet, dass** es eine Vorrichtung (1) umfasst, wie sie in einem der Ansprüche 6 bis 8 spezifiziert ist.

Fig. 1

Fig. 2

EP 1 907 910 B1

**EP 1 907 910 B1**

**RÉFÉRENCES CITÉES DANS LA DESCRIPTION**

**Documents brevets cités dans la description**

- FR 2859177